(19) Europäisches Patentamt
European Patent Office
Office européen des brevets

(11) **EP 2 556 957 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
*B32B 27/30* *(2006.01)*    *B32B 27/32* *(2006.01)*

(21) Anmeldenummer: **12178011.8**

(22) Anmeldetag: **26.07.2012**

(54) **FOLIENVERBUND ALS SCHUTZFOLIE FÜR TIEFZIEHANWENDUNGEN**

FILM COMPOUND AS PROTECTIVE FILM FOR DEEP DRAWING APPLICATIONS

FILM COMPOSITE EN TANT QUE FEUILLE DE PROTECTION POUR PLAIES PROFONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2011 DE 102011080831**

(43) Veröffentlichungstag der Anmeldung:
**13.02.2013 Patentblatt 2013/07**

(73) Patentinhaber: **Orbita-Film GmbH
06369 Weissandt-Gölzau (DE)**

(72) Erfinder:
• **Krüger, Norbert
06193 Wettin-Löbejün OT Merbitz (DE)**
• **Nase, Michael
06110 Halle (DE)**

(74) Vertreter: **Wablat Lange Karthaus
Anwaltssozietät
Potsdamer Chaussee 48
14129 Berlin (DE)**

(56) Entgegenhaltungen:
**DE-A1-102006 002 965**

**Beschreibung**

Verschiedenste Formkörper werden industriell durch Zug-Druck-Umformen erzeugt. Unter Zug-Druck-Umformen versteht man das Umformen eines festen Körpers, bei der der plastische Zustand durch eine zusammengesetzte Zug- und Druckbeanspruchung herbeigeführt wird. Das Zug-Druck-Umformen kann in die fünf Untergruppen Durchziehen, Tiefziehen, Drücken, Kragenziehen und Tiefbauchen eingeteilt werden.

Tiefziehen ist dabei das Zug-Druck-Umformen von Werkstoffen, insbesondere Metallen, beispielsweise in Form von Blechzuschnitten, in einen einseitig offenen Hohlkörper, oder eines vorgezogenen Hohlkörpers in einen solchen mit geringerem Querschnitt ohne gewollte Veränderung der Blechdicke.

Am weitesten verbreitet ist das Tiefziehen mit Werkzeugen. Dazu gehören das Tiefziehen mit starren Werkzeugen (Tiefziehen mit und ohne Niederhalter) und das Tiefziehen mit nachgiebigen Werkzeugen, beispielsweise mit Gummikissen. Bei diesen Tiefziehprozessen wirken Werkzeuge auf den tiefzuziehenden Werkstoff ein, wodurch es zu Beeinträchtigungen von dessen Oberfläche kommt. So ergeben sich Kratzer, Dellen etc .. Aufgrund dieser unerwünschten Beeinträchtigungen werden oftmals Schutzfolien verwendet, welche den Tiefziehprozess mit durchlaufen und anschließend wieder entfernt werden können.

Üblicherweise werden für Tiefziehanwendungen Schutzfolien aus Polyvinylchlorid (PVC) eingesetzt. PVC als amorphes Polymer weist gute Tiefzieheigenschaften auf, d.h. es gibt beispielsweise so gut wie keine Rückstellung in die ursprüngliche Form, die Folie verharrt vielmehr im tiefgezogenen Zustand. PVC weist einen hohen Widerstand gegenüber UV-Licht, Säuren, Basen und Öl auf.

Allerdings bringt PVC verschiedene gravierende Nachteile mit sich. Da es ein chlorhaltiges Polymer ist, entsteht bei Verbrennungsprozessen ätzender Chlorwasserstoff. Weiterhin kann Vinylchlorid beim Menschen karzinogen und erbgutverändernd wirken. Zur technischen Anwendung müssen weiterhin größere Mengen an Weichmachern zugesetzt werden. Beispielsweise sind hier Phthalate zu nennen, welche gesundheitsschädlich sind. Klassische PVC-Ersatzmaterialien wie thermoplastische Elastomere (TPEs), z.B. Septon, Hybrar oder Tuftec (Styrol-basierte Polymere), kommen allerdings für Tiefziehanwendungen nicht in Frage, da sie sehr flexibel sind und daher große Relaxationszeiten aufweisen.

Der Stand der Technik umfasst als PVC-Alternativen Folien, welche cycloolefinische Copolymere (COC) enthalten. Das EP 0 610 81581 beschreibt beispielsweise ein- oder mehrschichtige mono- oder biaxial orientierte Folien, bei welchen mindestens eine Schicht ein COC enthält, welches einen definierten mechanischen Verlustfaktor aufweist.

COCs haben sehr gute Schutzeigenschaften, d.h. sie eignen sich beispielsweise auch sehr gut als Wasserdampfsperrschicht. Aufgrund der ihnen eigenen Sprödigkeit lassen sich COCs allerdings schlecht gegen andere Materialien siegeln oder tiefziehen.

Die Verbundfolien der EP 1 213 138 B1 weisen zumindest eine Schicht auf, welche aus einem COC besteht. Das EP 1 213 138 B1 schlägt ergänzend vor, zumindest eine weitere Schicht aus einem Polyolefin auf die COC-Schicht aufzubringen. Die resultierenden Verbundfolien sollen leicht und sicher tiefziehbar sein.

Die DE 10238516 A1 beschreibt Polyolefin-Mehrschichtfolien, die aus mindestens drei Schichten bestehen. In einer Alternative kann eine solche Mehrschichtfolie eine Kernschicht aus einer Mischung mindestens eines teilkristallinen Polyolefins und mindestens 5 Gew.-% eines amorphen Polyolefins enthalten. Weiterhin sind zwei Deckschichten aus einem teilkristallinen Polyolefin und/oder Mischung aus Polypropylen und mindestens einem amorphen Polyolefin vorhanden. Hierbei können die amorphen Polyolefine COCs sein. Die teilkristallinen Polyolefine sind ausschließlich Polyolefine, d.h. Polymere aus Ethylen oder anderen alpha-Olefinen oder deren Copolymere. Diese Folien sollen eine gute Thermoformbarkeit bei gleichzeitigem geringem Schrumpf aufweisen.

Die genannten Verbundfolien des Stands der Technik haben allerdings den Nachteil, dass sie keine gleichmäßige Tiefziehwirkung haben, sondern sich in Längs- und Querrichtung unterschiedliche Tiefziehwirkungen ergeben. Insbesondere die Tiefziehwirkung in Querrichtung der Folie, ist unterschiedlich zu der in Längsrichtung der Folie. Somit ergibt sich eine ungleichmäßige Tiefziehwirkung in Dickenrichtung der Folie.

Generell sind für eine Schutzfolie für Tiefziehanwendungen -neben einer gleichmäßigen Tiefziehwirkung in Dickenrichtung- gute Rückstelleigenschaften (geringe Relaxationszeit, großer absoluter Spannungsabbau) sowie eine gute Adhäsion zu dem tiefzuziehenden Werkstoff erforderlich.

Der vorliegenden Erfindung lag daher das technische Problem zugrunde, eine Folie bereitzustellen, welche die oben genannten Nachteile überwindet, d.h. insbesondere eine gleichmäßige Tiefziehwirkung sowohl in Längs- als auch in Querrichtung bei Anwendung in einem Tiefziehprozess ergibt. Diese Aufgabe wird gelöst mit einem Folienverbund gemäß Anspruch 1 sowie dessen Verwendung gemäß Anspruch 8 und generell durch eine Tiefziehfolie gemäß Anspruch 9. Weitere bevorzugte Ausführungsformen sind in den abhängigen Ansprüchen dargelegt.

In anderen Worten wird die Aufgabe durch einen Folienverbund mit wenigstens drei Folienschichten gelöst, wobei die zwei äußeren Schichten jeweils unabhängig voneinander mindestens ein Polyolefin oder eine Mischung aus einem Ethylenvinylacetatcopolymer mit einem Polymer aus der Gruppe von Polyolefin und Polystyrol aufweisen und die mittlere Schicht ein cycloolefinisches Copolymer (COC) enthält, wobei die mittlere Schicht weiterhin mindestens ein Ethylenvinylacetatcopolymer (EVA) enthält.

Vorzugsweise weisen die äußeren Schichten eine identische Zusammensetzung auf und enthalten keine weiteren Polymere, d.h. sie bestehen aus den genannten Polymeren. Weiterhin ist es bevorzugt, dass die mittlere Schicht ausschließlich aus COC und EVA besteht, d.h. keine weiteren Polymere enthält. Der Folienverbund besteht ausschließlich aus diesen drei Schichten, d.h. es gibt keine Zwischenschichten zwischen der mittleren Schicht und den äußeren Schichten. Gegebenenfalls sind weitere Außen-Schichten vorhanden. In bevorzugten Ausführungsformen kann auf die dem tiefzuziehenden Werkstoff zugewandte Seite ein Kleber aufgebracht sein.

Die mittlere Schicht weist vorzugsweise 5 bis 95 Masse-% COC und 95 bis 5 Masse-% EVA auf. Besonders bevorzugt sind 20-50 Masse-% COC und 50-80 Masse-% EVA, höchst bevorzugt 30-40 Masse-% COC in Verbindung mit 60-70 Masse-% EVA.

Das EVA der mittleren Schicht weist vorzugsweise einen Vinylacetatgehalt von 0,1 bis 40 Masse-% auf, wobei 5-35 Masse-% stärker und 10-20 Masse-% besonders bevorzugt sind. In einer höchst bevorzugten Ausführungsform wird ein EVA mit 14 Masse-% Vinylacetatanteil genutzt (Greenflex FC 45).

Das COC der mittleren Schicht ist vorzugsweise ein Ethylen-Norbornen-Copolymer, welches einen Norbonen-Gehalt zwischen 35 und 70 Masse-% und einen Ethylen-Gehalt zwischen 30 und 65 Masse-% aufweist. Bevorzugt ist ein Norbonen-Gehalt zwischen 45 und 55 Masse-% und ein Ethylen-Gehalt zwischen 55 und 45 Masse-%.

Das/die Polyolefin(e) der äußeren Schichten sind bevorzugt Polyethylene geringer Dichte (PE-LD) oder lineare Polyethylene geringer Dichte (PE-LLD). PE-LD weist stark verzweigte Polymerketten und Dichten zwischen 0,915 g/cm$^3$ und 0,935 g/cm$^3$ auf. Bei PE-LLD hat das Polymermolekül nur kurze Verzweigungen. Diese Verzweigungen werden durch Copolymerisation von Ethen und höheren C3-Cw a-Olefinen (typischerweise Buten, Hexen oder Octen) hergestellt. Der Gehalt an alpha-Olefin beträgt 5 -12 Masse-%. Als PE-LLD ist besonders bevorzugt ein mit Octen copolymerisiertes Ethylen (PE-LLD C8).

In bevorzugten Ausführungsformen können eine oder alle Schichten (äußere Schichten und mittlere Schicht) jeweils unabhängig voneinander Farbmittel enthalten. Weiterhin können zumindest eine der äußeren Schichten und die mittlere Schicht jeweils unabhängig voneinander Antiblockmittel enthalten, wobei sowohl das Farbmittel als auch das Antiblockmittel unabhängig voneinander allein oder als Batch enthalten sind. Als weitere Additive können Anti-Schmelzbruchadditive enthalten sein. Im Fall von Batches können neben den genannten Polymeren weitere Polymere enthalten sein, beispielsweise PE, in Mengen von weniger als 5 Masse-%.

Der erfindungsgemäße Folienverbund wird als Schutzfolie für Tiefziehanwendungen von Werkstoffen, insbesondere von Metallen, verwendet. Bevorzugte Metalle sind hierbei Edelstahl und Aluminium.

Gegenstand der Erfindung ist auch eine Tiefziehfolie, hergestellt aus dem erfindungsgemäßen Folienverbund.

Der Folienverbund weist eine gute Tiefziehfähigkeit auf und zeigt gleichzeitig eine sehr gute Adhäsion zum aufgebrachten Kleber (hohe Peelkräfte, d.h. gute Adhäsion Folienverbund/ Kleber-Werkstoff). Die Rückstellkräfte nach erfolgtem Tiefziehen sind gering, d.h. die Relaxationszeit ist niedrig (Relaxationszeit = Maß, wie schnell Spannungen abgebaut werden). Die Relaxationszeit $\tau$ ist die Zeitkonstante des exponentiellen Kurvenfits eines speziellen Teils der Spannungs-Zeit-Kurve. Bei $\tau$ ist der Wert der Spannung $\sigma$ um 1/e (mathematische Konstante e) vermindert:

$$\sigma = \sigma_0 e^{-\frac{t}{\tau}}$$

Insbesondere hat sich gezeigt, dass die Tiefziehwirkung sowohl in Längs- als auch in Querrichtung und somit auch in Dickenrichtung des erfindungsgemäßen Folienverbundes gleichmäßig ist. So wurde die prozentuale Spannungsverminderung im Zugprüfungstest/ Relaxationstest (Vordehnung 80%) ermittelt. Die prozentualen Spannungsverminderungen weichen in Längs- als auch in Querrichtung nur um weniger als 4,4%, vorzugsweise um weniger als 3%, besonders bevorzugt um weniger als 1% voneinander ab. Im konkreten Beispiel wurde eine absolute Abweichung von lediglich 0,6%, d.h. eine relative prozentuale Verminderung von nur 1,7% ermittelt (bezogen auf den größeren Wert längs/quer).

Bei Vergleichsuntersuchungen, in denen anstelle des EVAs ein PE-LLD mit Octen Seitenketten (Attane SL 4102 G) im Relaxationstest verwandt wurde, ergab sich für diesen Folienverbund keine gleichmäßige Tiefziehwirkung in Längs- und Querrichtung. Hier differierten die Werte der prozentualen Spannungsverminderung um mehr als 6% (absolut) voneinander. Dies entspricht einer relativen prozentualen Verminderung von 17% (bezogen auf den größeren Wert längs/quer).

Das gleiche Ergebnis, d.h. ungleichmäßige Tiefziehwirkung in Längs- und Querrichtung, wurde erzielt bei einem Vergleich zu einer PVC-Folie aus dem Stand der Technik. Die Abweichung der prozentualen Spannungsverminderung in Längs- und Querrichtung war mit 4,4% Differenz geringfügig besser als beim Folienverbung mit PE-LLD mit Octen Seitenketten, allerdings deutlich schlechter als beim erfindungsgemäßen Folienverbund mit COC und EVA.

Diese Ergebnisse sind insbesondere überraschend, da PE, beispielsweise das oben genannte Attane, ein teilkristallines Polymer ist. EVAs mit einem Vinylacetatgehalt von bis zu 33 Masse-% können nur unter gewissen Umständen ebenfalls als teilkristallin angesehen werden. Allerdings sind EVAs nicht eindeutig im System der teilkristallinen oder amorphen Thermoplaste einordenbar, sondern eher als Elastomere einzustufen.

Die Erfindung soll im Folgenden anhand von Zeichnungen erläutert werden. Es zeigen

Fig.1 Einen Tiefziehprozess mit Stempelwerkzeug;

Fig.2: Einen Folienverbund mit mittlerer Schicht und äußeren Schichten;

Fig.3 Einen Folienverbund mit mittlerer Schicht und äußeren Schichten und einer zusätzlichen Kleberschicht, welche dem tiefzuziehenden Werkstoff zugewandt ist.

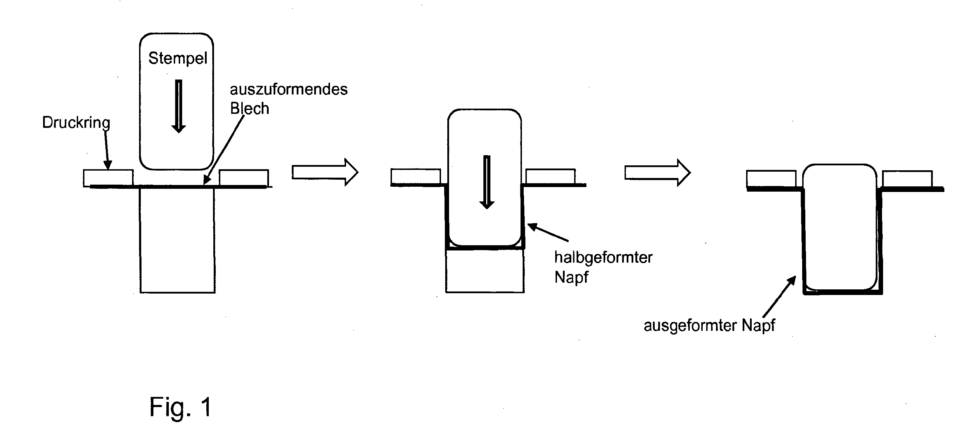

Fig. 1 zeigt einen Tiefziehprozess, in welchem ein Stempel auf einen tiefzuziehenden Werkstoff, z.B. ein Metallblech einwirkt, welches durch Niederhalter/Druckringe fixiert ist.

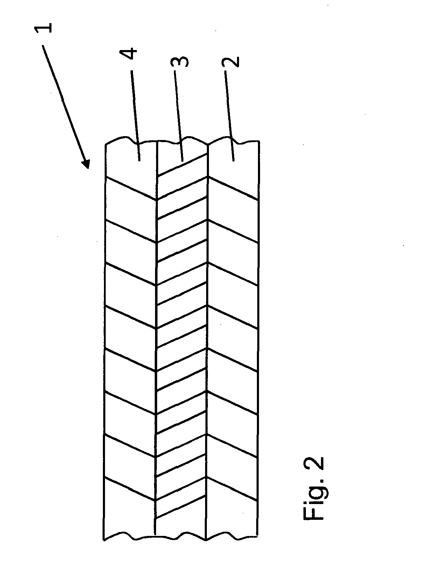

Fig. 2 zeigt einen Folienverbund 1 mit wenigstens drei Folienschichten 2,3 und 4, wobei die zwei äußeren Schichten 2 und 4 jeweils unabhängig voneinander mindestens ein Polyolefin oder eine Mischung aus einem Ethylenvinylacetatcopolymer mit einem Polymer aus der Gruppe von Polyolefin und Polystyrol aufweisen und die mittlere Schicht 3 ein cycloolefinisches Copolymer enthält und weiterhin mindestens ein Ethylenvinylacetatcopolymer enthält.

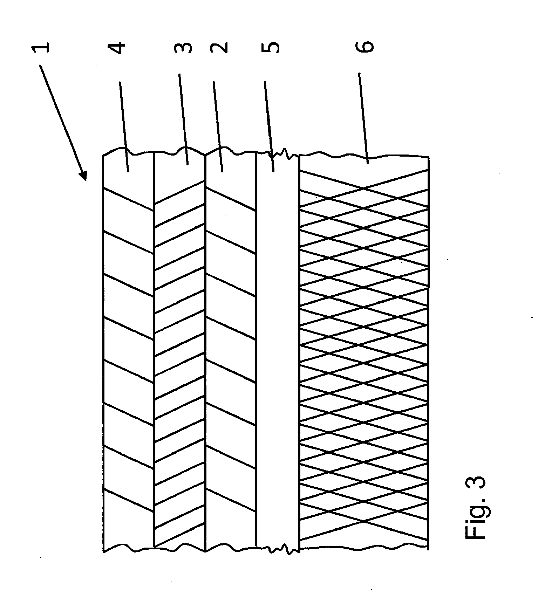

Fig. 3 zeigt einen Folienverbund 1 mit wenigstens drei Folienschichten 2, 3 und 4, wobei die zwei äußeren Schichten 2 und 4 jeweils unabhängig voneinander mindestens ein Polyolefin oder eine Mischung aus einem Ethylenvinylacetatcopolymer mit einem Polymer aus der Gruppe von Polyolefin und Polystyrol aufweisen und die mittlere Schicht 3 ein cycloolefinisches Copolymer enthält und weiterhin mindestens ein Ethylenvinylacetatcopolymer enthält. Auf einer äußeren Seite der Folienschicht 4 ist eine Kleberschicht 5 vorhanden, welche zwischen dem Folienverbund und dem tiefzuziehenden Werkstoff 6 angeordnet ist.

Bezugszeichen

1    Folienverbund
2    Äußere Schicht
3    Mittlere Schicht
4    Äußere Schicht
5    Klebeschicht
6    Tiefzuziehender Werkstoff (Metall)

**Beispiele**

Nachfolgend soll die Erfindung anhand von Beispielen erläutert werden, ohne sie darauf zu beschränken.

Beispiel 1 - Folienverbund

Ein Folienverbund 1 der nachstehend genannten Zusammensetzung wird mittels Coextrusion der Schichten 2, 3 und 4 gebildet.

| Schicht 2* | | Schicht 3* | | Schicht 4* | |
|---|---|---|---|---|---|
| 58% | Lupolen 1840 D (PE- LD) | 64,3% | Greenflex FC 45 (EVA mit 18 % VA-Anteil) | 58% | Lupolen 1840 D (PE-LD) |
| 40% | Attane SL 4102G (PE-LLD C8) | 35% | Topas 8007F-400 (COC) | 40% | Attane SL 41 02G (PE-LLD C8) |
| 2% | PB F 15 (Antiblockbatch) | 0,7% | Remafin PE 61000667-ZN grün (Grünbatch) | 2% | PB F 15 (Antiblockbatch) |
| *Alle %-Angaben sind Masse-%. | | | | | |

Beispiel 2- Messung der Tiefziehfähigkeit / Relaxationstest

In Längs- und Querrichtung der Folie aus Beispiel 1 wurden Streifen ausgeschnitten (Folienprüfkörper) und in eine Zugprüfmaschine eingespannt. Es wurde auf einen definierten Wert von 80 % Dehnung vorgedehnt. Anschließend wurde das Auseinanderfahren der Zugprüfklemmen gestoppt und die Spannung über der Zeit gemessen, d.h. das Spannungs-ZeitDiagramm aufgezeichnet. Die exponentielle Spannungsverminderung wurde ausgewertet. Es wurde der relative Spannungsabfall im vorgegebenen definierten Zeitraum von 135 Sekunden gemessen. Die gleiche Messung wurde für eine reine PVC-Folie, sowie für einen Folienverbund, welcher anstelle der erfindungsgemäßen Kombination aus COC+EVA die Kombination COC+Attane aufweist, durchgeführt.

Die ermittelten Werte sind der nachfolgenden Tabelle 1 entnehmen:

**Tabelle 1**

|  |  | PVC | | COC Attane | | COC mit EVA | |
|---|---|---|---|---|---|---|---|
|  |  | längs | quer | längs | quer | längs | quer |
| Δσ (%) | MW | 55,1 | 59,5 | 38,4 | 31,9 | 36,1 | 35,5 |
| Differenz | | 4,4 | | 6,5 | | 0,6 | |
|  | StabW [%] | 0,5 | 0,4 | 0,45 | 0,3 | 0,3 | 0,4 |

"PVC" in Tabelle 1 bezeichnet eine reine PVC-Folie des Standes der Technik. "COC Attane" steht für einen Folienverbund, dessen Zusammensetzung identisch zu der aus Beispiel 1 ist, mit der Abweichung, dass anstelle des EVAs aus Beispiel 1 ein PE-LLD mit Octen Seitenketten (Attane SL 4102 G) eingesetzt wurde. Die Prozentangaben sind dabei identisch zu denen aus Beispiel 1, d.h. es wurden 65 Masse-% Attane SL 4102 G anstelle von 65 Masse-% EVA eingesetzt. Die Bezeichnung "COC mit EVA" bezieht sich auf einen Folienverbund mit der erfindungsgemäßen Zusammensetzung gemäß Beispiel 1. "Δσ" ist die Spannungsverminderung über 135 Sekunden (MW: Mittelwert, Δσ= ($\sigma$ 1 - $\sigma$ 2) / $\sigma$ 1 * 100 %, wobei $\sigma$ 1 die Ausgangsspannung ist und $\sigma$ 2 die Spannung nach der Relaxation). "StabW" ist die Standardabweichung in Prozent. "Die Bezeichnungen "längs" und "quer" beziehen sich jeweils auf die Längs- bzw. Querrichtung der Folie/des Folienverbundes.

**Patentansprüche**

**1.**   Folienverbund (1) bestehend aus drei Folienschichten (2), (3) und (4) als Schutzfolie für Tiefziehanwendungen, wobei die zwei äußeren Schichten (2) und (4) jeweils unabhängig voneinander mindestens ein Polyolefin oder eine Mischung aus einem Ethylenvinylacetatcopolymer mit einem Polymer aus der Gruppe von Polyolefin und Polystyrol aufweisen und die mittlere Schicht (3) ein cycloolefinisches Copolymer enthält, **dadurch gekennzeichnet, dass** die mittlere Schicht (3) weiterhin mindestens ein Ethylenvinylacetatcopolymer enthält.

**2.**   Folienverbund (1) nach Anspruch 1, **dadurch gekennzeichnet, dass** die mittlere Schicht (3) 5 bis 95 Masse-% cycloolefinisches Copolymer und 95 bis 5 Masse-% Ethylenvinylacetatcopolymer enthält.

**3.**   Folienverbund (1) nach Anspruch 1 oder 2, **dadurch gekennzeichnet, dass** das Ethylenvinylacetatcopolymer der mittleren Schicht (3) einen Vinylacetatgehalt von 0,1 bis 40 Masse-% aufweist.

**4.**   Folienverbund (1) nach einem der Ansprüche 1 bis 3, **dadurch gekennzeichnet, dass** das cycloolefinische Copolymer der mittleren Schicht (3) ein Ethylen-Norbornen-Copolymer ist.

**5.**   Folienverbund (1) einem der Ansprüche 1 bis 4, **dadurch gekennzeichnet, dass** das EthylenNorbornen-Copolymer einen Norbonen-Gehalt zwischen 35 und 70 Masse-% und einen Ethylen-Gehalt zwischen 30 und 65 Masse-% aufweist.

**6.**   Folienverbund (1) nach einem der Ansprüche 1 bis 5, **dadurch gekennzeichnet, dass** die Polyolefine der Schichten (2) und/oder (4) Polyethylen geringer Dichte oder lineares Polyethylen geringer Dichte sind.

**7.**   Folienverbund (1) nach einem der Ansprüche 1 bis 6, **dadurch gekennzeichnet, dass** die Schichten (2), (3) und (4) jeweils unabhängig voneinander Farbmittel enthalten und/oder die Schichten (2) und (3) jeweils unabhängig voneinander Antiblockmittel enthalten, wobei sowohl das Farbmittel als auch das Antiblockmittel unabhängig voneinander allein oder als Batch enthalten sind.

**8.** Verwendung des Folienverbundes (1) nach einem der Ansprüche 1-7 als Schutzfolie für Tiefziehanwendungen, insbesondere bei Metallen.

**9.** Tiefziehfolie, hergestellt aus dem Folienverbund (1) gemäß einem der Ansprüche 1-7.

**Claims**

**1.** A film composite (1) consisting of three film layers (2), (3) and (4) as protective film for deep drawing applications, the two outer layers (2) and (4) each comprising, independently of one another, at least one polyolefin or a mixture of an ethylene-vinyl acetate copolymer with a polymer from the group of polyolefin and polystyrene, and the middle layer (3) containing a cyclic olefin copolymer, **characterised in that** the middle layer (3) further contains at least one ethylene-vinyl acetate copolymer.

**2.** The film composite (1) according to Claim 1, **characterised in that** the middle layer (3) contains 5 to 95 mass % of cyclic olefin copolymer and 95 to 5 mass % of ethylene-vinyl acetate copolymer.

**3.** The film composite (1) according to Claim 1 or 2, **characterised in that** the ethylene-vinyl acetate copolymer of the middle layer (3) comprises a vinyl acetate content from 0.1 to 40 mass %.

**4.** The film composite according to one of Claims 1 to 3, **characterised in that** the cyclic olefin copolymer of the middle layer (3) is an ethylene-norbornene copolymer.

**5.** The film composite (1) according to one of Claims 1 to 4, **characterised in that** the ethylene-norbornene copolymer has a norbornene content between 35 and 70 mass % and an ethylene content between 30 and 65 mass %.

**6.** The film composite (1) according to one of Claims 1 to 5, **characterised in that** the polyolefins of layers (2) and/or (4) are low-density polyethylene or linear low-density polyethylene.

**7.** The film composite (1) according to one of Claims 1 to 6, **characterised in that** the layers (2), (3) and (4) each contain dyes, independently of one another, and/or the layers (2) and (3) each contain anti-blocking agents, independently of one another, the dyes and the anti-blocking agents being contained alone or as a batch, independently of one another.

**8.** Use of the film composite (1) according to one of Claims 1-7 as protective film for deep drawing applications, in particular with metals.

**9.** A deep drawing film, produced from the film composite (1) according to one of Claims 1-7.

**Revendications**

**1.** Film composite (1) constitué des trois couches de film (2), (3) et (4), comme film protecteur pour des applications d'emboutissage profond, les deux couches extérieures (2) et (4) comportant chaque fois indépendamment l'une de l'autre au moins un polyoléfine ou un mélange d'un copolymère d'éthylène-vinylacétate avec un polymère du groupe du polyoléfine et du polystyrène et en ce que la couche centrale (3) contient un polymère cyclo-oléfinique, **caractérisé en ce que** la couche centrale (3) contient par ailleurs au moins un copolymère d'éthylène-vinylacétate.

**2.** Film composite (1) selon la revendication 1, **caractérisé en ce que** la couche centrale (3) contient de 5 à 95 % en masse de copolymère cyclo-oléfinique et de 95 à 5 % en masse de copolymère d'éthylène-vinylacétate.

**3.** Film composite (1) selon la revendication 1 ou la revendication 2, **caractérisé en ce que** le copolymère de vinylacétate de la couche centrale (3) comporte une teneur en vinylacétate de 0,1 à 40 % en masse.

**4.** Film composite (1) selon l'une quelconque des revendications 1 à 3, **caractérisé en ce que** le copolymère cyclo-oléfinique de la couche centrale (3) est un copolymère d'éthylène de norbornène.

**5.** Film composite (1) selon l'une quelconque des revendications 1 à 4, **caractérisé en ce que** le copolymère d'éthylène de norbornène comporte une teneur en norbornène comprise entre 35 et 70 % en masse et une teneur en éthylène comprise entre 30 et 65 % en masse.

**6.** Film composite (1) selon l'une quelconque des revendications 1 à 5, **caractérisé en ce que** les polyoléfines des couches (2) et/ou (4) sont du polyéthylène de faible densité ou du polyéthylène linéaire de faible densité.

**7.** Film composite (1) selon l'une quelconque des revendications 1 à 6, **caractérisé en ce que** les couches (2), (3) et 4 contiennent chaque fois indépendamment l'une de l'autre des colorants et/ou **en ce que** les couches (2) et (3) contiennent chaque fois indépendamment l'une de l'autre des agents antibloquants, aussi bien le colorant que l'agent antibloquant étant contenus indépendamment l'un de l'autre seul ou en lot.

**8.** Utilisation d'un film composite (1) selon l'une quelconque des revendications 1 à 7 comme film protecteur pour des applications d'emboutissage profond, notamment pour des métaux.

**9.** Film de thermoformage, fabriqué notamment à partir du film composite (1) selon l'une quelconque des revendications 1 à 7.

Fig. 1

EP 2 556 957 B1

Fig. 2

Fig. 3

**IN DER BESCHREIBUNG AUFGEFÜHRTE DOKUMENTE**

**In der Beschreibung aufgeführte Patentdokumente**

- EP 061081581 A
- EP 1213138 B1
- DE 10238516 A1